(19) **Europäisches Patentamt / European Patent Office / Office européen des brevets**

(11) **EP 2 747 473 B1**

(12) **EUROPEAN PATENT SPECIFICATION**

(45) Date of publication and mention
of the grant of the patent:
**22.05.2019 Bulletin 2019/21**

(21) Application number: **12839628.0**

(22) Date of filing: **28.06.2012**

(51) Int Cl.:
**H04W 16/20** *(2009.01)*     **H04W 52/24** *(2009.01)*

(86) International application number:
**PCT/CN2012/077688**

(87) International publication number:
**WO 2013/053247 (18.04.2013 Gazette 2013/16)**

(54) **METHOD AND DEVICE FOR DETECTING INDOOR DISTRIBUTION SIGNAL LEAKAGE**

VERFAHREN UND VORRICHTUNG ZUR ERKENNUNG VON VERTEILUNGSSIGNALLECKS IN INNENRÄUMEN

PROCÉDÉ ET DISPOSITIF DE DÉTECTION D'UNE FUITE DE SIGNAL DE DISTRIBUTION INTÉRIEURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2011 CN 201110306239**

(43) Date of publication of application:
**25.06.2014 Bulletin 2014/26**

(73) Proprietor: **Huawei Technologies Co., Ltd.**
**Longgang District**
**Shenzhen, Guangdong 518129 (CN)**

(72) Inventors:
• **CHEN, Xufeng**
 **Shenzhen**
 **Guangdong 518129 (CN)**
• **HE, Xiaomei**
 **Shenzhen**
 **Guangdong 518129 (CN)**
• **WANG, Hui**
 **Shenzhen**
 **Guangdong 518129 (CN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**EP-A1- 2 114 020     EP-A1- 2 259 638**
**WO-A1-2009/003413     CN-A- 101 815 307**
**CN-A- 101 895 924     CN-A- 101 895 924**
**CN-A- 102 202 353**

• **PATEL C ET AL: "Femtocell and Beacon Transmit Power Self-Calibration", INTERNET CITATION, 28 February 2010 (2010-02-28), pages 1-8, XP002637750, Retrieved from the Internet: URL:http://www.qualcomm.com/documents/files/femtocell-and-beacon-transmit-power-self-calibration.pdf [retrieved on 2011-05-16]**
• **YAVUZ M ET AL: "Interference management and performance analysis of UMTS/HSPA+ femtocells", IEEE COMMUNICATIONS MAGAZINE, IEEE SERVICE CENTER, PISCATAWAY, US, vol. 47, no. 9, 1 September 2009 (2009-09-01), pages 102-109, XP011283371, ISSN: 0163-6804, DOI: 10.1109/MCOM.2009.5277462**

**Description**

**TECHNICAL FIELD**

The present invention relates to the field of wireless communications technologies, and in particular, to a method and an apparatus for checking indoor signal leakage.

**BACKGROUND**

As the number of mobile users continuously increases, communications quality of a user inside a building gets more and more attention. An in-building solution increasingly provides coverage for scenarios such as an office building, a subway, a residential area, and a shopping mall, thereby ensuring call quality of users in these areas.

If an in-building solution is constructed improperly, call quality of an indoor user is not good, and an outdoor user is also negatively affected by the in-building solution. Signal leakage of an indoor cell is a major factor that affects an outdoor terminal.

An indoor cell refers to a cell of a base station serving an in-building solution. The indoor includes a relatively enclosed space such as a building, a venue, and a subway. Signal leakage of the indoor cell has negative effects, such as call drop of a quickly moving outdoor user that is passing by and deterioration of experience of an outdoor user using a data service.

Therefore, a simple and accurate method and apparatus are required to determine a cell where indoor signal leakage exists and perform adjustment in advance, so as to prevent an effect on an outdoor user.

EP 2259638 A1 proposes a method for estimating a position relation of a femto base station and mobile stations. In detail, D1 discloses the following: the femto base station receives a received power level RSCPi measured by the mobile stations, the femto base station receives a path loss measured by the mobile stations, extracts a minimum value RSCP_main and a maximum value RSCP_max form a plurality of RSCPi, the femto base station extracts a path loss of a mobile station that has measured the maximum value RSCP_max and a path loss of a mobile station that measured the minimum value RSCP_min, the femto base station determines the position relation of the femto base station and the mobiles stations in the build by comparing the magnitude relation of RSCP is among mobile stations and comparing the magnitude ration of the path loss among

**SUMMARY**

Embodiments of the present invention provide a method and an apparatus for checking indoor signal leakage, so as to simply and accurately determine a cell where indoor signal leakage exists.

The embodiments of the present invention may specifically be implemented through the following technical solutions:

In one aspect, a method for checking indoor signal leakage is provided, and the method includes:

obtaining (201), multiple measurement reports (MRs) of a terminal, and performing parsing to obtain multiple pieces of MR data of the terminal, wherein the multiple MRs and the multiple pieces of MR data are corresponding to each other, each MR data comprises measurement information of a primary serving cell of one of the terminal and measurement information of at least one neighboring cell of the primary serving cell, and the measurement information indicates a signal level;

filtering (202) out, invalid MR data of the multiple pieces of MR data, wherein the invalid MR data comprises the MR data in which the primary serving cell is an indoor cell, and/or the MR data in which the signal levels of all neighboring cell levels of the primary serving cell are greater than a preset filtering threshold;

generating (203), neighboring cell pairs according to MR data that is obtained after the filtering, wherein the neighboring cell pairs are not repeated, each neighboring cell pair includes multiple pieces of record information for a primary serving cell as an outdoor macro cell and an indoor cell as a neighboring cell of the outdoor macro cell, each piece of the record information includes measurement information of a primary serving cell included in the neighboring cell pair and measurement information of an indoor cell included in the neighboring cell pair ; and

determining (204), according to the multiple pieces of record information of the each neighboring cell pair, whether signal leakage exists in the indoor cell.

An apparatus for checking indoor signal leakage is further provided, and the apparatus includes:

an obtaining unit (1), configured to obtain multiple measurement reports MRs of a terminal, and parse multiple MRs to obtain multiple pieces of MR data of the terminal, wherein the multiple MRs and the multiple pieces of MR data are corresponding to each other, each MR data comprises measurement information of a primary serving cell of the terminal and measurement information of at least one neighboring cell of the primary serving cell, and the measurement information indicates a signal level;

a filtering unit (2), configured to filter out invalid MR data of the multiple pieces of MR data, wherein the invalid MR data comprises the MR data in which the primary serving cell is an indoor cell, and/or the MR data in which the signal levels of all neighboring cell levels of the primary serving cell are greater than a preset filtering threshold;

a generating unit (3), configured to generate neighboring cell pairs according to MR data that is obtained after the filtering, wherein the neighboring cell pair are not repeated, each neighboring cell pair includes multiple pieces of record information for a primary serving cell as an outdoor macro cell and an indoor cell as a neighboring cell of the outdoor macro cell, each piece of the record information includes measurement information of a primary serving cell included in the neighboring cell pair and measurement information of an indoor cell included in the neighboring cell pair ; and

a determining unit (4), configured to determine, according to the multiple pieces of record information of the each neighboring cell pair, whether signal leakage exists in the indoor cell.

In the embodiments of the present invention, a terminal measurement report is obtained from a base station side, and parsing is performed to obtain MR data; then an invalid MR is filtered out; neighboring cell pairs are generated according to MR data that is obtained after the filtering, where each neighboring cell pair includes multiple pieces of record information for a same primary serving cell and a same indoor cell, each piece of the record information includes measurement information of a primary serving cell and measurement information of an indoor cell of a terminal, the primary serving cell is an outdoor macro cell, and the indoor cell is a neighboring cell of the outdoor macro cell; and finally whether signal leakage exists in the indoor cell is determined according to the record information of the neighboring cell pair, so that a cell where indoor signal leakage exists can be simply and accurately found to perform adjustment in time, thereby preventing an effect on an outdoor user.

## BRIEF DESCRIPTION OF DRAWINGS

FIG. 1 is a schematic diagram of a field test for indoor signal leakage in the prior art;
FIG. 2 is an overall flowchart of checking indoor signal leakage by using MR data according to an embodiment of the present invention;
FIG. 3 is a schematic diagram of terminal measurement according to an embodiment of the present invention; and
FIG. 4 is a schematic structural diagram of an apparatus for checking indoor signal leakage by using MR data according to an embodiment of the present invention.

## DESCRIPTION OF EMBODIMENTS

To make the technical solutions of the present invention more comprehensible for a person skilled in the art, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

Various technologies described in this specification are applicable to various wireless communications systems, for example, current 2G and 3G communications systems and a next generation communications system. For example, the present invention applies to wireless networks such as UMT, GSM (Global System for Mobile communications, global system for mobile communications), GPRS (General Packet Radio Service, general packet radio service), CDMA2000 (Code Division Multiple Access 2000, code division multiple access 2000), TD-SCDMA (Time Division-Synchronous Code Division Multiple Access, time division-synchronous code division multiple access), LTE (Long Term Evolution, long term evolution), WLAN (Wireless Local Area Network, wireless local area network)/WiFi (Wireless Fidelity, wireless fidelity), and WiMAX (Worldwide Interoperability for Microwave Access, worldwide interoperability for microwave access).

In addition, in this specification, terms "system" and "network" are often interchangeably used. In this specification, a term "and/or" only describes an association relationship between associated objects, and indicates that three relationships may exist. For example, A and/or B may indicate three cases: Only A exists; both A and B exist; and only B exists. In addition, in this specification, a symbol "/" generally indicates that associated objects before and after have a relationship of "or".

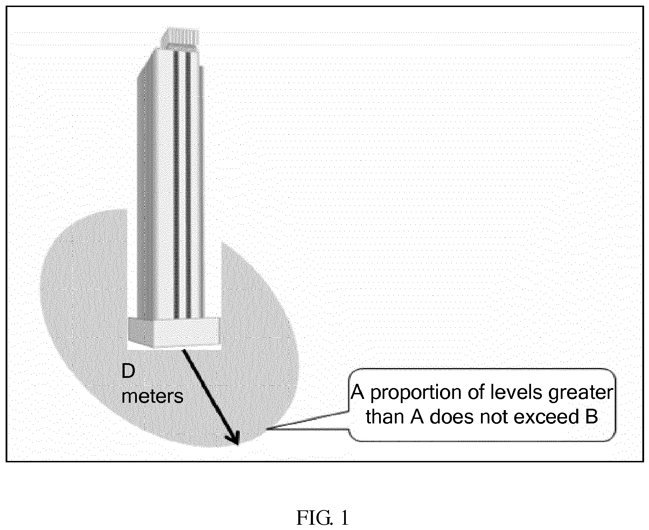

Currently, there are mainly two methods for checking indoor signal leakage. One is to check indoor signal leakage through a field test, as shown in FIG. 1. In this method, road test software is used to perform a level test in roads surrounding an in-building solution, give a level threshold, and define that if a proportion of levels greater than the level threshold exceeds a certain proportion threshold, it is determined that leakage exists in the in-building solution. However, in this method, a test engineering team needs to be configured to test all indoor cells in a network one by one and perform manual data analysis, and therefore, an operation and maintenance cost is high and efficiency is low.

The other is to determine, according to multiple KPI (Key Performance Indicator, key performance indicator) indicators of an indoor cell, whether the indoor cell is an indoor signal leakage cell. That is, if some KPIs of a certain indoor cell are worse than an average KPI of indoor cells in an entire network, it is considered that leakage exists in the indoor cell. However, with this method, only a cell where severe indoor signal leakage exists can be found, but detection fails if indoor signal leakage ubiquitously exists in an entire network.

For the foregoing defect, an embodiment of the present invention provides a method for checking indoor signal leakage, and the method mainly includes:

obtaining a terminal measurement report MR from a base station side, and performing parsing to obtain terminal measurement report MR data;

filtering out an invalid MR;

generating neighboring cell pairs according to MR data that is obtained after the filtering, where each neighboring cell pair includes multiple pieces of record information for a same primary serving cell and a same indoor cell, each piece of the record information includes measurement information of a primary serving cell and measurement information of an indoor cell of a terminal, the primary serving cell is an outdoor macro cell, and the indoor cell is a neighboring cell of the outdoor macro cell; and

determining, according to the record information of the neighboring cell pair, whether signal leakage exists in the indoor cell.

The following further illustrates the present invention with reference to the accompanying drawings and specific embodiments.

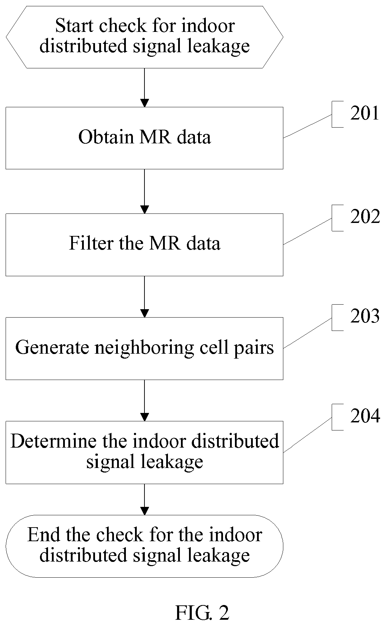

As shown in FIG. 2, a method for checking indoor signal leakage according to an embodiment of the present invention includes:

Step 201: Obtain a terminal measurement report MR from a base station side, and perform parsing to obtain terminal measurement report MR data.

When communicating with a base station, a terminal automatically sends its terminal measurement report to a base station that covers the terminal, and the base station automatically saves the terminal measurement report. Therefore, a terminal measurement report can be obtained from all base stations that provide services in an area where check for indoor signal leakage is performed, and is parsed to obtain required MR data.

Step 202: Filter out an invalid MR.

There are two filtering conditions (a) and (b). An MR that meets either filtering condition is an invalid MR. In an actual application, either filtering condition may be used for filtering, or both filtering conditions may be used for filtering.

(a) An MR in which a primary serving cell of the terminal is an indoor cell is filtered out.

A technical problem to be solved in this embodiment is to simply and accurately determine a cell where signal leakage exists, and perform adjustment, so as to prevent an effect on communications quality of an outdoor user. That is, in this embodiment, the primary serving cell of the terminal is an outdoor macro base station cell, that is, an outdoor macro cell, and an indoor cell is included in neighboring cells of the primary serving cell. Therefore, the MR in which the primary serving cell of the terminal is the indoor cell needs to be filtered out.

(b) An MR in which all neighboring cell levels of the primary serving cell of the terminal are greater than a preset filtering threshold is filtered out.

For a terminal of an indoor high-story user, a situation in which a primary serving cell of the terminal is an outdoor macro cell may occur, and generally neighboring cell levels received by the indoor high-story user are all high. Therefore, when statistics are collected on indoor cell signal leakage, the MR in which all the neighboring cell levels of the primary serving cell of the terminal are greater than the preset filtering threshold needs to be filtered out.

The preset filtering threshold may be set according to an actual situation, and in this embodiment, may be set to -75dBm, which is an empirical value concluded in a corresponding algorithm verification process in the embodiment of the present invention.

Step 203: Generate, according to MR data that is obtained after the filtering, neighboring cell pairs that are not repeated, where each neighboring cell pair includes multiple pieces of record information for a same primary serving cell and a same indoor cell, each piece of the record information includes measurement information of a primary serving cell and measurement information of an indoor cell of a terminal, the primary serving cell is an outdoor macro cell, and the indoor cell is a neighboring cell of the outdoor macro cell.

The neighboring cell pair may be in a format of (the primary serving cell, the indoor cell). The primary serving cell is an outdoor macro cell, and the indoor cell is a neighboring cell of the outdoor macro cell.

In this embodiment, statistics on a signal level of the primary serving cell of the terminal and a signal level of the indoor cell neighboring to the primary serving cell in the MR data may be collected according to a corresponding neighboring cell pair.

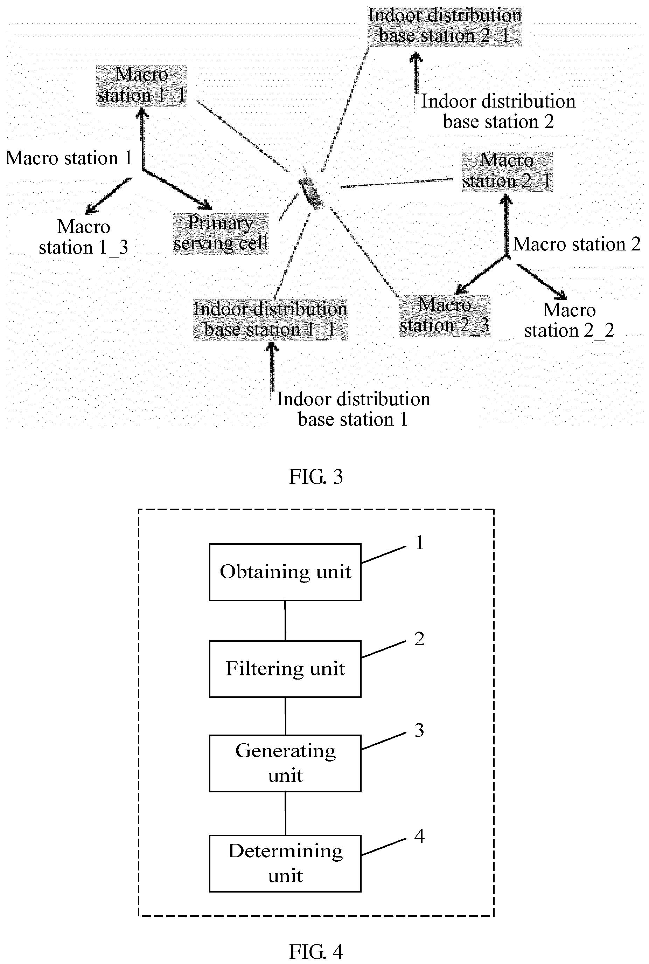

As shown in FIG. 3, the terminal is served by "a primary serving cell", and may measure levels of surrounding neighboring cells at the same time, where "an indoor base station 1_1" and "an indoor base station 2_1" are indoor cells. A measurement report includes a level of the primary serving cell of the terminal and a level of a neighboring cell. Assumed measured levels are shown in the following Table 1:

**Table 1**

| MR Time | Cell name | | Signal level (dBm) |
|---------|-----------|--|--------------------|
| XXXX | Primary serving cell | Primary serving cell | -65 |
| | Neighboring cell 1 | Indoor base station 1_1 | -70 |
| | Neighboring cell 2 | Macro base station 1_1 | -75 |
| | Neighboring cell 3 | Indoor base station 2_1 | -77 |
| | Neighboring cell 4 | Macro base station 2_3 | -79 |
| | Neighboring cell 5 | Macro base station 2_1 | -83 |
| ... | ... | ... | ... |

As shown in Table 1, the primary serving cell has two indoor neighboring cells, that is, the indoor base station 1_1 and the indoor base station 2_1. The neighboring cell pairs (the primary serving cell, the indoor base station 1_1) and (the primary serving cell, the indoor base station 2_1) are established according to the description in step 203 in this embodiment, and corresponding data is added as the record information of the neighboring cell pairs, as shown in Table 2 and Table 3:

**Table 2**

| Primary serving cell | Indoor base station 1_1 |
|----------------------|-------------------------|
| -65 | -70 |
| ... | ... |

**Table 3**

| Primary serving cell | Indoor base station 2_1 |
|----------------------|-------------------------|
| -65 | -77 |
| ... | ... |

Step 204: Determine, according to the record information of the neighboring cell pair, whether signal leakage exists in the indoor cell.

There are two determining rules (a) and (b). Only when both of the determining rules are met, it can be determined that indoor signal leakage exists in the indoor cell in the neighboring cell pair.

(a) The number of pieces of the record information of the neighboring cell pair exceeds a preset value.
(b) A proportion of the record information in which a signal level of the indoor cell in the neighboring cell pair is greater than a preset level threshold is greater than a preset proportion.

The preset level threshold and the preset value may be set according to an actual situation. In this embodiment, the preset level threshold may be set to -80dBm, the preset value may be set to 300, and the preset proportion may be set to 20%, which are all empirical values concluded in a corresponding algorithm verification process.

For example, as for the indoor base station 1_1 in Table 1, the indoor cell "the indoor base station 1_1" is measured by the terminal in the outdoor macro cell "the primary serving cell". If a measured signal level of the indoor cell "the indoor base station 1_1" is greater than the preset level threshold, the number of pieces of the record information in which the signal level of the indoor cell in the (the primary serving cell, the indoor base station 1_1) neighboring cell pair is greater than the preset level threshold is increased by 1.

All measurement reports are processed successively. After statistics on all the measurement reports are collected, it is assumed that the total number of pieces of the record information of the neighboring cell pair in the statistics is M (M should be greater than the preset value, and in this embodiment, the preset value may be set to 300, which is the empirical value concluded in the corresponding algorithm verification process), and N that is the number of pieces of the record information in which the signal level of the indoor cell in the neighboring cell pair is greater than the preset level threshold is obtained. Then according to a formula: $\alpha = \dfrac{N}{M} \times 100\%$, a proportion of the record information in which the signal level of the indoor cell "the indoor base station 1_1" in the neighboring cell pair is greater than the preset level threshold is calculated, and is used as a standard for finally determining whether leakage exists in the indoor cell "the indoor base station 1_1".

After statistics on all (the primary serving cell, the indoor cell) neighboring cells in the terminal measurement report are collected according to the foregoing method, if a proportion of a certain neighboring cell pair exceeds the preset proportion, it is considered that signal leakage exists in an indoor cell in the neighboring cell pair.

Step 205: Calculate a direction of the indoor cell signal leakage.

With the technical solution provided in this embodiment, information statistics is collected from the perspective of a neighboring cell pair. Therefore, not only whether signal leakage exists in an indoor cell can be determined according to record information of each neighboring cell pair, but also a direction of indoor signal leakage can be calculated by using longitude and latitude information of the indoor cell and an outdoor macro cell.

First, a primary serving cell and an indoor cell where leakage occurs are determined; then, their base stations are determined according to the primary serving cell and the indoor cell where the leakage occurs; and then, a direction of indoor signal leakage is calculated according to longitude and latitude of the two base stations. A specific calculation formula is in the prior art, and is not described again in this embodiment.

An embodiment of the present invention further provides a method for determining indoor signal leakage. This embodiment is substantially the same as the foregoing embodiment. A difference is that, a determination index used for determining indoor signal leakage is a signal level difference between an outdoor macro cell and an indoor cell, and at the same time, a corresponding preset level difference threshold needs to be appropriately adjusted.

With the method for checking indoor signal leakage provided in the embodiment of the present invention, check for indoor signal leakage is performed by using data in a terminal measurement report, so that a problem of low efficiency of network operation and maintenance and huge labor input that are caused by a field test is solved, and the method is a method that combines advantages of both a field test and index-based determining. At a BSS (Base Station Subsystem, base station subsystem) side and a terminal side, no hardware facility needs to be added, only a terminal measurement report based on a protocol provision needs to be obtained to simply and accurately determine, in advance, a cell where indoor signal leakage exists, and no coupling exists between the technical solution of the present invention and a communications system.

Another embodiment:

Based on the foregoing method embodiment, the present invention further provides an apparatus for checking indoor signal leakage by using MR data. As shown in FIG. 4, the apparatus for checking indoor signal leakage includes:

an obtaining unit 1, configured to obtain a terminal measurement report from a base station side, and perform parsing to obtain terminal measurement report MR data;
a filtering unit 2, configured to filter out an invalid MR;
a generating unit 3, configured to generate neighboring cell pairs according to MR data that is obtained after the filtering, where each neighboring cell pair includes multiple pieces of record information for a same primary serving cell and a same indoor cell, each piece of the record information includes measurement information of a primary serving cell and measurement information of an indoor cell of a terminal, the primary serving cell is an outdoor macro cell, and the indoor cell is a neighboring cell of the outdoor macro cell; and
a determining unit 4, configured to determine, according to the record information of the neighboring cell pair, whether signal leakage exists in the indoor cell.

Further, after determining, according to the record information of the neighboring cell pair, whether the signal leakage exists in the indoor cell, the determining unit 4 may further determine a direction of the indoor cell signal leakage according to a location of a base station of the primary serving cell and a location of a base station of the indoor cell where the leakage occurs.

It may be clearly understood by a person skilled in the art that, for the purpose of convenient and brief description, for a detailed working process of the foregoing apparatus and units, reference may be made to a corresponding process in the foregoing method embodiment, and details are not described herein again.

In several embodiments provided in the present invention, it should be understood that the disclosed apparatus and method may be implemented in other manners. For example, the apparatus embodiment described in the foregoing is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit. The foregoing integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, which includes several instructions for instructing a computer device (which may be a personal computer, a server, or a network device) to perform all or a part of the methods described in the embodiments of the present invention. The foregoing storage medium includes various media that can store program codes, such as a USB flash disk, a removable hard disk, a read-only memory (ROM, Read-Only Memory), a random access memory (RAM, Random Access Memory), a magnetic disk, or an optical disc.

**Claims**

1. A method for checking indoor signal leakage, comprising:

   obtaining (201) multiple measurement reports MRs of a terminal, and performing parsing to obtain multiple pieces of MR data of the terminal, wherein the multiple MRs and the multiple pieces of MR data are corresponding to each other, each MR data comprises measurement information of a primary serving cell of one of the terminal and measurement information of at least one neighboring cell of the primary serving cell, and the measurement information indicates a signal level;
   filtering (202) out invalid MR data of the multiple pieces of MR data, wherein the invalid MR data comprises the MR data in which the primary serving cell is an indoor cell, and/or the MR data in which the signal levels of all neighboring cell levels of the primary serving cell are greater than a preset filtering threshold;
   generating (203) neighboring cell pairs according to MR data that is obtained after the filtering, wherein the neighboring cell pairs are not repeated, each neighboring cell pair comprises multiple pieces of record information for a primary serving cell as an outdoor macro cell and an indoor cell as a neighboring cell of the outdoor macro cell, each piece of the record information comprises measurement information of a primary serving cell included in the neighboring cell pair and measurement information of an indoor cell included in the neighboring cell pair; and
   determining (204) according to the multiple pieces of record information of the each neighboring cell pair, whether signal leakage exists in the indoor cell.

2. The method according to claim 1, wherein the determining, according to the multiple pieces of record information of the each neighboring cell pair, whether signal leakage exists in the indoor cell specifically is: determining that the signal leakage exists in the indoor cell, if the number of pieces of record information of a neighboring cell pair exceeds a preset value and a proportion of the record information in which a signal level of the indoor cell is greater than a preset level threshold is greater than a preset proportion.

3. The method according to claim 1, wherein the determining according to the multiple pieces of record information of the each neighboring cell pair, whether signal leakage exists in the indoor cell specifically is: determining that the signal leakage exists in the indoor cell, if the number of pieces of record information of a neighboring cell pair exceeds a preset value and a proportion of the record information in which a signal level difference between the primary serving cell and the indoor cell is greater than a preset level difference threshold is greater than a preset proportion.

4. The method according to claim 1, further comprising the following step: determining the direction of the indoor cell signal leakage according to longitude and latitude of the base station and longitude and latitude of a base station of the indoor cell where the leakage occurs, after the determining, according to the at least one record information of the neighboring cell pair, whether the signal leakage exists in the indoor cell.

5. An apparatus for checking indoor signal leakage, comprising:

an obtaining unit (1), configured to obtain multiple measurement reports MRs of a terminal and perform parsing to obtain multiple pieces of MR data of the terminal, wherein the multiple MRs and the multiple pieces of MR data are corresponding to each other, each MR data comprises measurement information of a primary serving cell of the terminal and measurement information of at least one neighboring cell of the primary serving cell, and the measurement information is a signal level;

a filtering unit (2), configured to filter out invalid MR data of the multiple pieces of MR data, wherein the invalid MR data comprises the MR data in which the primary serving cell is an indoor cell, and/or the MR data in which the signal levels of all neighboring cell levels of the primary serving cell are greater than a preset filtering threshold;

a generating unit (3), configured to generate neighboring cell pairs according to MR data that is obtained after the filtering, wherein each neighboring cell pair comprises multiple pieces of record information for a primary serving cell and an indoor cell, each piece of the record information comprises measurement information of a primary serving cell included in the neighboring cell pair corresponding to the record information and measurement information of an indoor cell included in the neighboring cell pair corresponding to the record information, the primary serving cell of the each neighboring cell pair is an outdoor macro cell, and the indoor cell of the each neighboring cell pair is a neighboring cell of the outdoor macro cell, the neighboring cell pairs are different respectively; and

a determining unit (4), configured to determine, according to the multiple pieces of record information of the each neighboring cell pair, whether signal leakage exists in the indoor cell.

6. The apparatus according to claim 5, wherein after determining, according to the multiple pieces of record information of the each neighboring cell pair, whether the signal leakage exists in the indoor cell, the determining unit further determines a direction of the indoor cell signal leakage according to the primary serving cell and the indoor cell where the leakage occurs.

**Patentansprüche**

1. Verfahren zum Überprüfen eines Innensignalverlusts, umfassend:

Erhalten (201) mehrerer Messreporte, MR, eines Endgeräts,
und Durchführen von Parsing, um mehrere MR-Daten des Endgeräts zu erhalten, wobei die mehreren MR und die mehreren MR-Daten einander entsprechen, jedes MR-Datenelement eine Messinformation einer primären bedienenden Zelle eines des Endgeräts und eine Messinformation mindestens einer benachbarten Zelle der primären bedienenden Zelle umfasst und die Messinformation eine Signalebene anzeigt;
Herausfiltern (202) eines ungültigen MR-Datenelements der mehreren MR-Daten, wobei das ungültige MR-Datenelement die MR-Daten, in welchen die primäre bedienende Zelle eine Innenzelle ist, und/oder die MR-Daten umfassen, in welchen die Signalebenen aller benachbarten Zellebenen der primären bedienenden Zelle größer sind als ein voreingestellter Filterschwellenwert;
Erzeugen (203) von benachbarten Zellpaaren gemäß dem MR-Datenelement, das nach dem Filtern erhalten wird, wobei die benachbarten Zellpaare nicht wiederholt werden, jedes benachbarte Zellpaar mehrere Aufzeichnungsinformationen für eine primäre bedienende Zelle als eine Außenmakrozelle und eine Innenzelle als eine benachbarte Zelle der Außenmakrozelle umfasst, jede Aufzeichnungsinformation eine Messinformation einer primären bedienenden Zelle, die in dem benachbarten Zellpaar enthalten ist, und eine Messinformation einer Innenzelle, die in dem benachbarten Zellpaar enthalten ist, umfasst; und
Bestimmen (204) gemäß den mehreren Aufzeichnungsinformationen jedes benachbarten Zellpaars, ob ein Signalverlust in der Innenzelle existiert.

**2.** Verfahren nach Anspruch 1, wobei das Bestimmen gemäß den mehreren Aufzeichnungsinformationen jedes benachbarten Zellpaars, ob ein Signalverlust in der Innenzelle existiert, insbesondere ist:
Bestimmen, dass der Signalverlust in der Innenzelle existiert, wenn die Anzahl an Aufzeichnungsinformationen eines benachbarten Zellpaars einen voreingestellten Wert überschreitet und ein Anteil der Aufzeichnungsinformation, in welchem eine Signalebene der Innenzelle größer als ein voreingestellter Ebenenschwellenwert ist, größer als ein voreingestellter Anteil ist.

**3.** Verfahren nach Anspruch 1, wobei das Bestimmen gemäß den mehreren Aufzeichnungsinformationen jedes benachbarten Zellenpaars, ob ein Signalverlust in der Innenzelle existiert, insbesondere ist:
Bestimmen, dass der Signalverlust in der Innenzelle existiert, wenn die Anzahl an Aufzeichnungsinformationen eines benachbarten Zellpaars einen voreingestellten Wert überschreitet und ein Anteil der Aufzeichnungsinformation, in welchem ein Signalebenenunterschied zwischen der primären bedienenden Zelle und der Innenzelle größer als ein voreingestellter Ebenenunterschiedschwellenwert ist, größer als ein voreingestellter Anteil ist.

**4.** Verfahren nach Anspruch 1, ferner umfassend den folgenden Schritt:
Bestimmen der Richtung des Innenzellensignalverlusts gemäß dem Längengrad und Breitengrad der Basisstation und dem Längengrad und Breitengrad einer Basisstation der Innenzelle, wo der Verlust auftritt, nach dem Bestimmen gemäß der mindestens einen Aufzeichnungsinformation des benachbarten Zellpaars, ob der Signalverlust in der Innenzelle existiert.

**5.** Vorrichtung zum Überprüfen von Innensignalverlust, umfassend:

eine Erhaltungseinheit (1), die konfiguriert ist, um mehrere Messreporte, MR, eines Endgeräts zu erhalten und Parsing durchzuführen, um mehrere MR-Daten des Endgeräts zu erhalten, wobei die mehreren MR und die mehreren MR-Daten einander entsprechen, jedes MR-Datenelement eine Messinformation einer primären bedienenden Zelle des Endgeräts und eine Messinformation mindestens einer benachbarten Zelle der primären bedienenden Zelle umfasst und die Messinformation eine Signalebene ist;
eine Filtereinheit (2), die konfiguriert ist, um ein ungültiges MR-Datenelement der mehreren MR-Daten herauszufiltern, wobei das ungültige MR-Datenelement das MR-Datenelement, in welchem die primäre bedienende Zelle eine Innenzelle ist, und/oder das MR-Datenelement umfasst, in welchem die Signalebenen aller benachbarter Zellebenen der primären bedienenden Zelle größer als ein voreingestellter Filterschwellenwert sind;
eine Erzeugungseinheit (3), die konfiguriert ist, um benachbarten Zellpaare gemäß dem MR-Datenelement zu erzeugen, welches nach dem Filtern erhalten wird, wobei jedes benachbarte Zellpaar mehrere Aufzeichnungsinformationen für eine primäre bedienende Zelle und eine Innenzelle, jede Aufzeichnungsinformation eine Messinformation einer primären bedienenden Zelle, die in dem der Aufzeichnungsinformation entsprechenden benachbarten Zellpaar enthalten ist, und eine Messinformation einer Innenzelle, die in dem der Aufzeichnungsinformation entsprechenden benachbarten Zellpaar enthalten ist, umfasst, die primäre bedienende Zelle jedes benachbarten Zellpaars eine Außenmakrozelle ist und die Innenzelle jedes benachbarten Zellpaars eine benachbarte Zelle der Außenmakrozelle ist, wobei die benachbarten Zellpaare jeweils unterschiedlich sind; und
eine Bestimmungseinheit (4), die konfiguriert ist, um gemäß den mehren Aufzeichnungsinformationen jedes benachbarten Zellpaars zu bestimmen, ob ein Signalverlust in der Innenzelle existiert.

**6.** Vorrichtung nach Anspruch 5, wobei nach dem Bestimmen gemäß den mehreren Aufzeichnungsinformationen jedes benachbarten Zellpaars, ob der Signalverlust in der Innenzelle existiert, die Bestimmungseinheit ferner eine Richtung des Signalverlusts der Innenzelle gemäß der primären bedienenden Zelle und der Innenzelle, wo der Verlust auftritt, umfasst.

**Revendications**

**1.** Procédé de vérification d'une fuite de signal intérieure, consistant à :

obtenir (201) de multiples rapports de mesure (MR) d'un terminal, et réaliser une analyse pour obtenir de multiples éléments de données MR du terminal, les multiples MR et les multiples éléments de données MR correspondant les uns avec les autres, les données MR comprenant chacune une information de mesure d'une cellule de desserte principale du terminal et une information de mesure d'au moins une cellule voisine de la cellule de desserte principale, et l'information de mesure indiquant un niveau de signal ;
filtrer (202) des données MR non valides des multiples éléments de données MR, les données MR non valides comprenant les données MR où la cellule de desserte principale est une cellule intérieure, et/ou les données MR où les niveaux de signal de tous les niveaux de cellule voisine de la cellule de desserte principale sont supérieurs à un seuil de filtrage prédéfini ;

générer (203) des paires de cellules voisines selon des données MR qui sont obtenues après le filtrage, les paires de cellules voisines n'étant pas répétées, chaque paire de cellules voisines comprenant de multiples éléments d'information d'enregistrement pour une cellule de desserte principale en guise de macro-cellule extérieure et une cellule intérieure en guise de cellule voisine de la macro-cellule extérieure, chaque élément d'information d'enregistrement comprenant une information de mesure d'une cellule de desserte principale incluse dans la paire de cellules voisines et une information de mesure d'une cellule intérieure incluse dans la paire de cellules voisines ; et

déterminer (204), selon les multiples éléments d'information d'enregistrement de chaque paire de cellules voisines, si une fuite de signal existe dans la cellule intérieure.

2. Procédé selon la revendication 1, dans lequel la détermination, selon les multiples éléments d'information d'enregistrement de chaque paire de cellules voisines, de si une fuite de signal existe dans la cellule intérieure, consiste spécifiquement à :

déterminer que la fuite de signal existe dans la cellule intérieure, si le nombre d'éléments d'information d'enregistrement d'une paire de cellules voisines dépasse une valeur prédéfinie et si une proportion de l'information d'enregistrement où un niveau de signal de la cellule intérieure est supérieur à un seuil de niveau prédéfini est supérieure à une proportion prédéfinie.

3. Procédé selon la revendication 1, dans lequel la détermination, selon les multiples éléments d'information d'enregistrement de chaque paire de cellules voisines, de si une fuite de signal existe dans la cellule intérieure, consiste spécifiquement à :

déterminer que la fuite de signal existe dans la cellule intérieure, si le nombre d'éléments d'information d'enregistrement d'une paire de cellules voisines dépasse une valeur prédéfinie et si une proportion de l'information d'enregistrement où une différence de niveau de signal entre la cellule de desserte principale et la cellule intérieure est supérieure à un seuil de différence de niveau prédéfini est supérieure à une proportion prédéfinie.

4. Procédé selon la revendication 1, comprenant en outre l'étape suivante consistant à :

déterminer la direction de la fuite de signal de cellule intérieure selon une longitude et une latitude de la station de base et une longitude et une latitude d'une station de base de la cellule intérieure où se produit la fuite, après qu'il a été déterminé, selon l'au moins une information d'enregistrement de la paire de cellules voisines, si la fuite de signal existe dans la cellule intérieure.

5. Appareil de vérification d'une fuite de signal intérieure, comprenant :

une unité d'obtention (1), configurée pour obtenir de multiples rapports de mesure (MR) d'un terminal, et réaliser une analyse pour obtenir de multiples éléments de données MR du terminal, les multiples MR et les multiples éléments de données MR correspondant les uns avec les autres, les données MR comprenant chacune une information de mesure d'une cellule de desserte principale du terminal et une information de mesure d'au moins une cellule voisine de la cellule de desserte principale, et l'information de mesure étant un niveau de signal ;

une unité de filtrage (2), configurée pour filtrer des données MR non valides des multiples éléments de données MR, les données MR non valides comprenant les données MR où la cellule de desserte principale est une cellule intérieure, et/ou les données MR où les niveaux de signal de tous les niveaux de cellule voisine de la cellule de desserte principale sont supérieurs à un seuil de filtrage prédéfini ;

une unité de génération (3), configurée pour générer des paires de cellules voisines selon des données MR qui sont obtenues après le filtrage, chaque paire de cellules voisines comprenant de multiples éléments d'information d'enregistrement pour une cellule de desserte principale et une cellule intérieure, chaque élément d'information d'enregistrement comprenant une information de mesure d'une cellule de desserte principale incluse dans la paire de cellules voisines correspondant à l'information d'enregistrement, et une information de mesure d'une cellule intérieure incluse dans la paire de cellules voisines correspondant à l'information d'enregistrement, la cellule de desserte principale de chaque paire de cellules voisines étant une macro-cellule extérieure, et la cellule intérieure de chaque paire de cellules voisines étant une cellule voisine de la macro-cellule extérieure, les paires de cellules voisines étant respectivement différentes ; et

une unité de détermination (4), configurée pour déterminer, selon les multiples éléments d'information d'enregistrement de chaque paire de cellules voisines, si une fuite de signal existe dans la cellule intérieure.

**6.** Appareil selon la revendication 5, dans lequel, après la détermination, selon les multiples éléments d'information d'enregistrement de chaque paire de cellules voisines, de si la fuite de signal existe dans la cellule intérieure, l'unité de détermination détermine en outre une direction de la fuite de signal de cellule intérieure selon la cellule de desserte principale et la cellule intérieure où se produit la fuite.

FIG. 1

Start check for indoor
distributed signal leakage

Obtain MR data — 201

Filter the MR data — 202

Generate neighboring cell pairs — 203

Determine the indoor distributed
signal leakage — 204

End the check for the indoor
distributed signal leakage

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2259638 A1